# EUROPÄISCHE PATENTANMELDUNG

(11) **EP 2 575 040 A1**
(43) Veröffentlichungstag der Anmeldung: **03.04.2013**
(21) Anmeldenummer: 11183137.6
(22) Anmeldetag: 28.09.2011
(51) Int. Cl.: G06F 9/455, G06F 9/48

(54) **Verfahren für die Verarbeitung von Unterbrechungsanforderungen eines Datenverarbeitungsgerätes und Virtualisierungssteuerung für ein Datenverarbeitungsgerät**

(71) Anmelder: Siemens Aktiengesellschaft, 80333 München (DE)
(72) Erfinder: Niesser, Otto, 90584 Allersberg (DE); Ünver, Halil Caglar, 90402 Nürnberg (DE)

(57) **Zusammenfassung**

Die Erfindung betrifft ein Verfahren und eine Virtualisierungssteuerung für die Verarbeitung von Unterbrechungsanforderungen (INT) mittels eines Datenverarbeitungsgerätes mit zumindest einer virtuellen Maschine (VM 0, VM 1), wobei auf der zumindest einen virtuellen Maschine (VM 0, VM 1) ein Betriebssystem installiert ist, und wobei eine Virtualisierungssteuerung (VMM0, VMM1) den Betrieb der virtuellen Maschine (VM 0, VM 1) kontrolliert. Dabei wird bei den Unterbrechungsanforderungen (INT) zumindest zwischen ersten und zweiten Unterbrechungsanforderungen (INT) unterschieden, wobei im Fall einer ersten Unterbrechungsanforderung (INT) ein Grund für diese erste Unterbrechungsanforderung (INT) in einen Nachrichtenspeicher geschrieben und danach die Kontrolle an die Virtualisierungssteuerung (VMM0, VMM1) übergeben wird, wobei durch die Virtualisierungssteuerung (VMM0, VMM1) der Nachrichtenspeicher ausgelesen und anhand des ausgelesenen Grundes eine Aktion durchgeführt wird, und wobei im Fall einer zweiten einer zweiten Unterbrechungsanforderung (INT) diese direkt an das Betriebssystem der virtuellen Maschine (VM 0, VM 1) weitergeleitet wird. Dadurch wird die Gesamt-Performance von Gast-Betriebssystemen verbessert, weil nur noch Reaktionen für die entsprechend konfigurierten Interrupts, die zu "Special-Purpose"-Interrupts führen, definiert sein müssen.

## Beschreibung

Die Erfindung betrifft ein Verfahren für die Verarbeitung von Unterbrechungsanforderungen mittels eines Datenverarbeitungsgerätes gemäß dem Oberbegriff des Patentanspruchs 1, und eine Virtualisierungssteuerung für ein Datenverarbeitungsgerät.

Personal-Computer und ähnliche gebräuchliche Hardware-Architekturen werden vermehrt auch zur Realisierung von speicherprogrammierbaren Steuerungen, sog. "Soft-PLC's" (PLC = Programmable Logic Controller), verwendet. Für diese speicherprogrammierbaren Steuerungen werden in der Regel sog. Echtzeitbetriebssysteme verwendet, also Betriebssysteme, die derart ausgestaltet oder verändert sind, dass diese hohe Anforderungen an Reaktionszeiten, Zykluszeiten, Betriebssicherheit etc. erfüllen. Oft werden dabei Virtualisierungs-Techniken angewendet, d.h., dass eine Virtualisierungssoftware (Virtual Machine Manager, Hypervisor) dazu verwendet wird, das Echtzeit-Betriebssystem in einer separaten virtuellen Laufzeitumgebung ablaufen zu lassen. Sofern mit derselben Hardware-Plattform auch andere Aufgaben erledigt werden sollen, können Nicht-Echtzeit-Betriebssysteme, auch "General Purpose Operation Systems" genannt, in weiteren virtuellen Maschinen parallel zum Ablauf gebracht werden. Darüber hinaus ist es möglich, in Systemen mit Mehrkernprozessoren oder mit mehreren Mikroprozessoren einen der Prozessorkerne oder einen der Prozessoren für die virtuelle Maschine mit dem Echtzeit-Betriebssystem zu reservieren.

Wenn in einer solchen Architektur ein Ereignis verarbeitet werden soll, bedeutet dies, dass der Mikroprozessor oder zumindest einer der Prozessoren bzw. Prozessor-Kerne die gerade in Abarbeitung befindliche Aufgabe unterbricht, in eine Routine zur Behandlung des Ereignisses einspringt, und schließlich zu der unterbrochenen Aufgabe zurückkehrt. Zur Unterbrechung der laufenden Aufgabe werden bei Ereignissen sog. "Interrupts" ausgelöst, wobei diese durch einen programmierbaren Interrupt-Controller erzeugt oder verarbeitet werden und an die gerade ablaufende virtuelle Maschine bzw. das darin ablaufende Betriebssystem gemeldet werden. Somit führen alle Interrupts dazu, dass der gerade vom Betriebssystem gestützte Prozess, also beispielsweise ein Automatisierungsprogramm, unterbrochen wird. Somit unterbrechen alle Interrupts ein Automatisierungsprogramm oder dgl., was den Ablauf stört und oft zu ungewollten Verzögerungen führt.

Weiter ist es bekannt, die Behandlung der extern generierten Interrupts durch die Virtualisierungssteuerung (Virtual Machine Monitor, Hypervisor) durchzuführen, was jedoch ebenfalls zu Performance-Einbußen führt. Außerdem wird dadurch die Komplexität der Virtualisierungssteuerung erhöht, denn die Virtualisierungssteuerung muss dabei für jeden Interrupt programmiert sein und entscheiden, ob und welche Reaktion erfolgen muss und, falls notwendig, den Interrupt dann doch an die virtuelle Maschine mit dem zuständigen Betriebssystem weiterleiten. Dabei können "Verweildauern" in der Virtualisierungssteuerung entstehen, die so lange sind, dass weitere Probleme entstehen, insbesondere bei anderen, zeitkritischen Aufgaben der Virtualisierungssteuerung oder während der "Verweildauer" auftretenden weiteren Interrupts etc. Außerdem wird bei der Weiterleitung von Interrupts zu den virtuellen Maschinen bzw. den darin untergebrachten Betriebssystemen das Verfahren des "Interrupt Injections" verwendet. Dabei akzeptieren die virtualisierten Betriebssysteme solche injizierten Interrupts aber nicht zu jeder Zeit, sondern nur bei bestimmten Betriebszuständen. Dies bedeutet, dass bei dem beschriebenen Verfahren, bei dem alle Interrupts durch die Virtualisierungsschicht abgefangen werden, Probleme bei solchen Unterbrechungsanforderungen entstehen können, welche eine prompte Reaktion erfordern, bzw. wo es wichtig ist, dass solche Unterbrechungsanforderungen unverzüglich von einem Betriebssystem, insbesondere dem Echtzeit-Betriebssystem, verarbeitet werden müssen.

Es ist also eine Aufgabe der vorliegenden Erfindung, die Verarbeitung von Unterbrechungsanforderungen in Datenverarbeitungsgeräten mit virtuellen Maschinen zu verbessern.

Es ist eine Kernidee der Lösung der erfindungsgemäßen Aufgabe, dass bei zeitkritischen Unterbrechungsanforderungen der Grund für diese Unterbrechungsanforderung in einen Nachrichtenspeicher ("Message Box") geschrieben werden kann, wonach mittels eines "Special-Purpose"Interrupts die virtuelle Maschine mit dem zuständigen Betriebssystem zu einem unverzüglichen Aussprung in die Virtualisierungssteuerung gezwungen wird, wonach durch die Virtualisierungssteuerung anhand des Grundes, der im Nachrichtenspeicher abgelesen oder anhand eines Zustands einer beteiligten Hardware-Komponente bestimmt werden kann, die entsprechende Aktion bestimmt, auslöst oder ausführt. Als "Special-Purpose"-Interrupts sollen dabei erfindungsgemäß sog. Interprozessor-Interrupts vom Typ "INIT" oder "START" gewählt werden, welche standardmäßig dazu eingerichtet sind, eine Maschine oder ein darin ablaufendes Betriebssystem zu initialisieren bzw. zu starten. Erfindungsgemäß sollen jedoch die Register derart konfiguriert werden, dass anstelle des Neustarts oder der Initialisierung der virtuellen Maschine oder des Gast-Betriebssystems, insbesondere des Echtzeit-Betriebssystems, eine Verzweigung in die Virtualisierungssteuerung stattfindet, wonach anhand des aufgetretenen Ereignisses eine passende vorprogrammierte Reaktion erfolgen soll.

Die Erfindung wird insbesondere durch ein Verfahren gemäß dem Patentanspruchs 1 und durch eine Virtualisierungssteuerung gemäß dem Patentanspruch 13 gelöst.

Dabei wird ein Verfahren für die Verarbeitung von Unterbrechungsanforderungen mittels eines Datenverarbeitungsgerätes mit zumindest einer virtuellen Maschine vorgesehen, wobei auf der zumindest einen virtuellen Maschine ein Betriebssystem installiert ist, und wobei eine Virtualisierungssteuerung den Betrieb der virtuellen Maschine kontrolliert. Dabei wird bei den Unterbrechungsanforderungen zumindest zwischen ersten und zweiten Unterbrechungsanforderungen unterschieden, wobei im Fall einer ersten Unterbrechungsanforderung die Kontrolle an die Virtualisierungssteuerung übergeben wird, wobei durch die Virtualisierungssteuerung eine Aktion durchgeführt wird, und wobei im Fall einer zweiten einer zweiten Unterbrechungsanforderung diese direkt an das Betriebssystem der virtuellen Maschine weitergeleitet wird. Anstelle des Abfangens aller Interrupts eines Prozessor-Kerns werden nun nur noch Interrupts, die von vordefinierten Geräten o.ä. stammen, zur Unterbrechung der zugeordneten virtuellen Maschine verwendet, indem diese wichtigen Interrupts in den entsprechenden Kontrollregistern derart konfiguriert werden, dass diese "Special-Purpose"-Interrupts generieren. Dadurch wird die Gesamt-Performance der Gast-Betriebssysteme, insbesondere eines Echtzeit-Betriebssystems, verbessert, wobei die Komplexität der Virtualisierungssteuerung in Bezug auf die Behandlung von Interrupts verringert wird, weil nur noch Reaktionen für die entsprechend konfigurierten Interrupts, die zu "Special-Purpose"-Interrupts führen, definiert sein müssen.

Das Verfahren wird außerdem durch eine Virtualisierungssteuerung für ein Datenverarbeitungsgerät gelöst, wobei die Virtualisierungssteuerung zur Initialisierung des Datenverarbeitungsgeräts eingerichtet wird, wobei das Datenverarbeitungsgerät zur Ausführung des vorstehend beschriebenen Verfahrens eingerichtet ist, wobei zumindest ein Ereignis zum Auslösen einer ersten oder einer zweiten Unterbrechungsanforderung konfigurierbar ist. Dadurch lassen sich die Vorteile des erfindungsgemäßen Verfahrens realisieren.

Vorteilhafte Ausgestaltungen des erfindungsgemäßen Verfahrens sind in den abhängigen Patentansprüchen angegeben. Die dabei angegebenen Merkmale und Vorteile gelten sinngemäß auch für die erfindungsgemäße Virtualisierungssteuerung. Die beschriebenen Merkmale können entweder einzeln oder in Kombination miteinander realisiert werden.

Vorteilhaft wird beim Erzeugen der ersten Unterbrechungsanforderung ein Grund für diese erste Unterbrechungsanforderung in einen Nachrichtenspeicher geschrieben, wonach durch die Virtualisierungssteuerung der Nachrichtenspeicher ausgelesen und danach anhand des ausgelesenen Grundes die Art der Aktion bestimmt oder ausgewählt wird.

Vorteilhaft werden auf dem Datenverarbeitungsgerät mehrere virtuelle Maschinen betrieben, wobei zumindest in einer der virtuellen Maschinen ein Echtzeit-Betriebssystem abläuft. In einer weiteren vorteilhaften Ausgestaltung wird zumindest die Maschine mit dem Echtzeit-Betriebssystem auf einem eigenen Prozessorkern oder auf einem eigenst dafür reservierten Mikroprozessor ausgeführt. Auf diese Weise kann der Aussprung aus der virtuellen Maschine mit dem Echtzeit-Betriebssystem auf die Fälle beschränkt werden, in denen ein Ereignis durch das Echtzeit-Betriebssystem verarbeitet werden muss.

Als erste Unterbrechungsanforderung wird vorteilhaft ein Interrupt, dessen Aussprung (VM-Exit) separat konfigurierbar ist, verwendet, insbesondere ein Inter-Prozessor-Interrupt vom Typ "INIT" oder "START". Dadurch ist zum einen gewährleistet, dass nicht nur extern generierte Interrupts, sondern auch Unterbrechungsanforderungen von anderen Prozessorkernen verarbeitet werden können. Zum anderen wird dadurch gewährleistet, dass bei jeglichem Betriebszustand der zu unterbrechenden virtuellen Maschine bzw. des zu unterbrechenden Betriebssystems ein Aussprung in die oder in eine Virtualisierungssteuerung erfolgen kann.

Als Aktion kann, abhängig vom Inhalt des Nachrichtenspeichers, falls notwendig ein Interrupt in ein dafür vorgesehenes Betriebssystem einer der virtuellen Maschinen injiziert werden. Dies bedeutet, dass nicht jegliche Reaktion auf eine Unterbrechungsanforderung durch die Virtualisierungssteuerung selbst durchgeführt werden muss, sondern dass die Interrupt-Handler des entsprechenden Betriebssystems ähnlich wie im Stand der Technik diese Aufgaben erfüllen können.

In einer vorteilhaften Ausgestaltung wird als das vorgesehene Betriebssystem eine sog. "Service-Maschine" verwendet. Dies bedeutet, dass für verschiedene Aufgaben eine virtuelle Maschine vorgesehen werden kann, deren "Gast" die Behandlung vordefinierter Ereignisse durchführt. Dies hat den Vorteil, dass die "Verweildauer" in der Virtualisierungssteuerung verkürzt werden kann und die Komplexität der Virtualisierungssteuerung nicht zu groß wird. Anstelle der Service-Maschine kann auch ein Nicht-Echtzeit-Betriebssystem verwendet werden, beispielsweise ein gebräuchliches Betriebssystem wie Microsoft Windows, Linux, etc.

Im Gegensatz zur ersten Unterbrechungsanforderung wird als die zweite Unterbrechungsanforderung vorteilhaft ein Standard-Interrupt verwendet, so dass weniger zeitkritische Ereignisse beispielsweise erst dann behandelt werden, wenn entsprechend Rechenzeit erübrigt werden kann.

Als Aktion kann vorteilhaft ein Kontextwechsel ("Scheduling") zwischen einer Anzahl virtueller Maschinen ausgelöst werden, wozu beispielsweise ein Signal eines Timers o.ä. als erste Unterbrechungsanforderung konfiguriert wird, so dass für den Kontextwechsel nicht abgewartet werden muss, bis die Virtualisierungssteuerung ohnehin eingesprungen wird. Als weitere mögliche Aktion bietet sich die Überwachung eines Betriebssystems, insbesondere des Echtzeit-Betriebssystems, nach Art eines "Watch Dogs" an. Durch die Konfigurierung der ersten Unterbrechungsanforderung als Inter-Prozessor-Interrupt (START, INIT) kann so eine regelmäßige Verzweigung in die Virtualisierungssteuerung auch dann erfolgen, wenn die zu überwachende virtuelle Maschine (oder eine andere virtuelle Maschine) "hängt" oder andere Schwierigkeiten bereitet. Ausführungsbeispiele des erfindungsgemäßen Verfahrens werden nachfolgend anhand der Zeichnungen erläutert. Sie dienen gleichzeitig der Erläuterung einer erfindungsgemäßen Virtualisierungssteuerung.

Dabei zeigen:
- Figur 1: in schematischer Darstellung eine Hardware-Architektur mit zwei Prozessorkernen und zwei virtuellen Maschinen, wobei der unbedingte Aussprung in eine Virtualisierungssteuerung gezeigt wird,
- Figur 2: dieselbe Anordnung, wobei eine Interrupt-Anforderung eines anderen Prozessorkerns verarbeitet wird, und
- Figur 3: eine entsprechende Anordnung, bei der mittels des erfindungsgemäßen Verfahrens der zyklische Kontextwechsel zwischen mehreren virtuellen Maschinen auf einen Prozessorkern gesteuert wird.

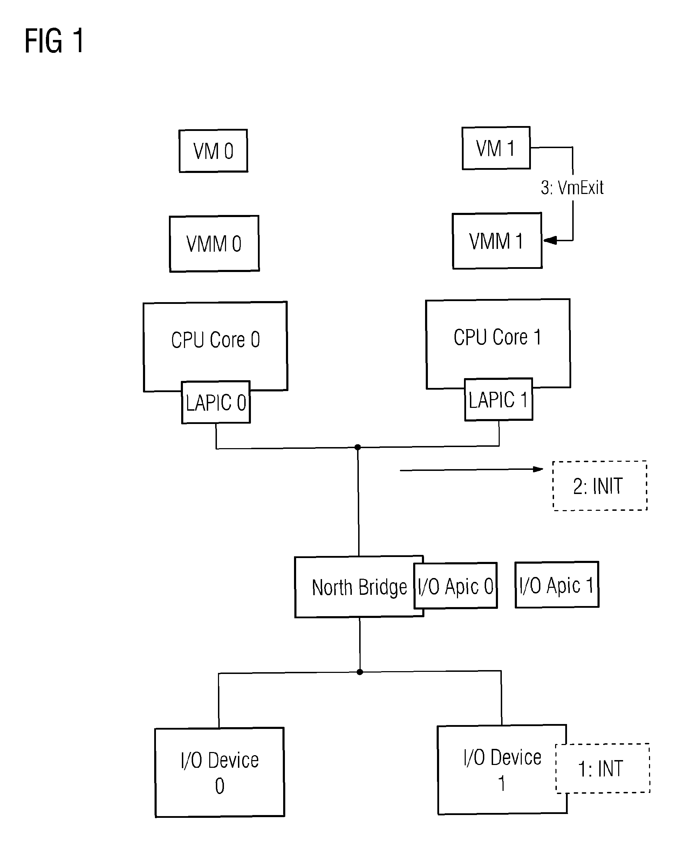

In der Figur 1 ist schematisch eine Hardware-Architektur dargestellt, die zwei Prozessorkerne CPU Core 0, 1 mit jeweils lokalen Interrupt-Controllern LAPIC 0, 1 umfasst. Als Peripheriegeräte, die Interrupts oder Ereignisse für Interrupts erzeugen können, sind die Geräte I/O Device 0, 1 gezeigt, wobei die damit erzeugten Interrupts von den Interrupt-Controllern I/O Apic 0, 1 erzeugt oder verarbeitet werden. Anstelle oder zusätzlich zur Verwendung der Unterbrechungsanforderungen der Interrupt-Controller LAPIC 0, 1 können auch MSI's (Message-Signaled Interrupts) erfindungsgemäß verarbeitet werden; dies ist aber nicht dargestellt. Dem Prozessorkern CPU Core 0 ist die Virtualisierungssteuerung VMM 0 (Virtual Machine Monitor, Hypervisor) zugeordnet, der die virtuelle Maschine VM 0 steuert. Analog dazu läuft die virtuelle Maschine VM 1 und die Virtualisierungssteuerung VMM1 auf dem zweiten Prozessorkern CPU Core 1 ab.

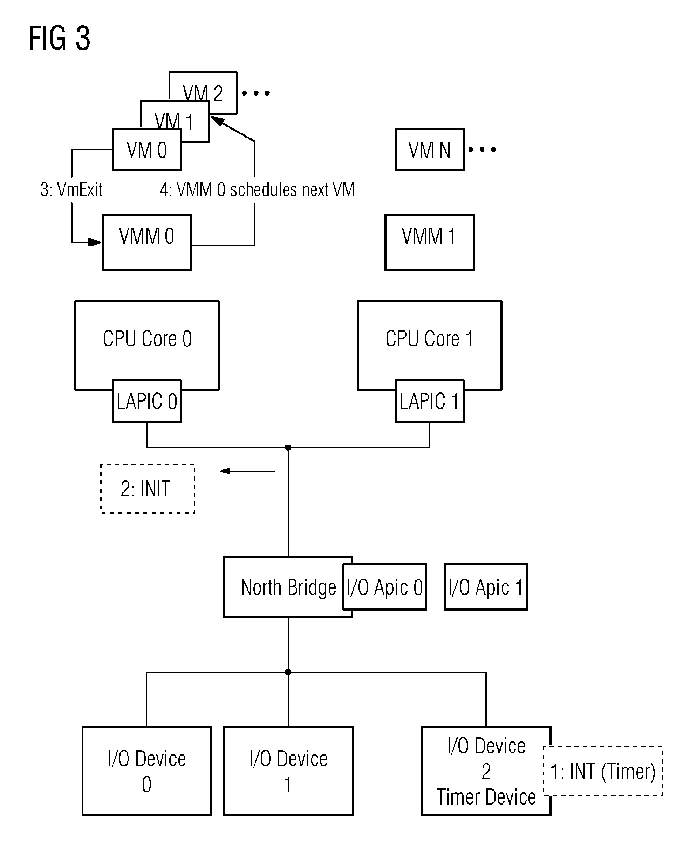

Im Folgenden soll anhand der Figur 1 die grundsätzliche Idee demonstriert werden, nach der ein "INIT"-Signal zum Erzwingen eines "VmExit" verwendet wird. Dazu sind die Interrupt-Controller I/O Apic 1, LAPIC 1 derart initialisiert, dass bei einem Interrupt INT, der in einem ersten Schritt von dem I/O Device 1 (beispielsweise ein Timer-Device) erzeugt wird, nicht, wie im Stand der Technik, ein normaler maskierbarer Interrupt erzeugt wird, sondern im Schritt 2 ein "INIT"-Signal. Dabei ist der zweite Prozessorkern CPU Core 1 und dessen lokaler Interrupt-Controller LAPIC 1 derart konfiguriert, dass nicht die virtuelle Maschine VM 1 vollständig neu initialisiert wird, sondern (im dritten Schritt) einen Aussprung VmExit in die Virtualisierungssteuerung VMM 1 geschieht. Dazu wird in einem Register oder in einem sonstigen zugreifbaren Datenspeicher bei der Generierung des als nichtmaskierbarer, hochpriorer "Special-Prupose"-Interrupt ausgestalteten "INIT"-Interrupts die Information darüber hinterlegt, dass das Peripheriegerät I/O Device 1 den Aussprung VmExit veranlasst hat. Diese Information kann durch die Virtualisierungssteuerung VMM 1 ausgelesen werden, so dass eine vordefinierte Aktion durchgeführt werden kann. Eine solche Aktion wird später anhand der Figur 3 näher erläutert.

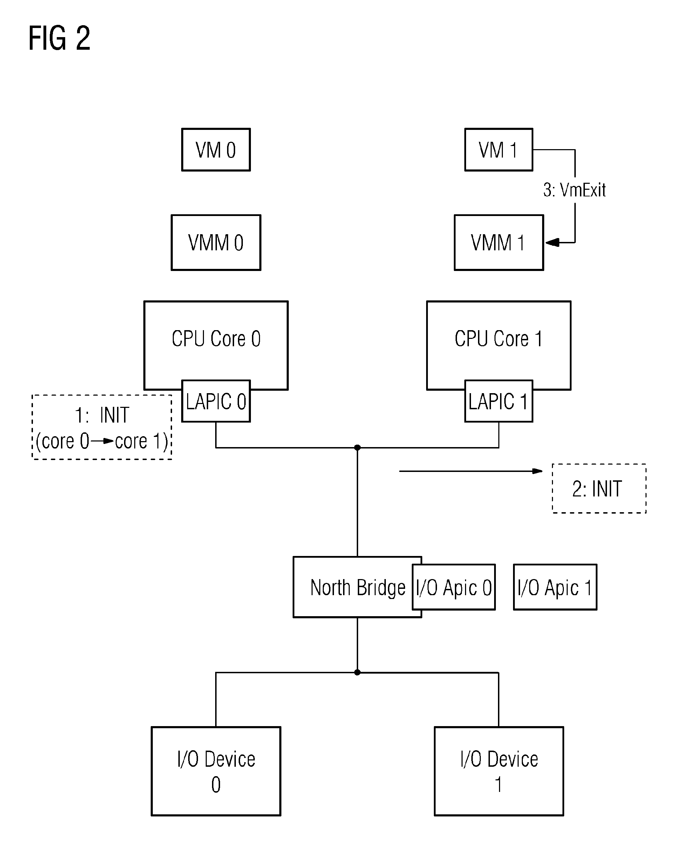

In der Figur 2 ist dieselbe Anordnung wie in der Figur 1 schematisch dargestellt, so dass bezüglich der Funktionalität der einzelnen Komponenten auf die Beschreibung der Figur 1 verwiesen wird.

Im Unterschied zu dem anhand der Figur 1 erläuterten Verfahren ist es hier ein (nicht dargestelltes) Betriebssystem, welches in der virtuellen Maschine VM 0 abläuft und einen sog. "Inter-Prozessor-Interrupt" erzeugt, wobei ebenfalls ein sofortiger Aussprung VmExit im dritten Schritt erzwungen wird. Bezüglich beider Figuren und der damit beschriebenen Verfahren sei angemerkt, dass gebräuchliche, maskierbare Interrupts nach wie vor ebenfalls verarbeitet werden können, wobei diese jedoch nicht - was häufig unerwünscht ist - zu jedem Zeitpunkt die virtuelle Maschine VM 1 und ein dort installiertes Echtzeit-Betriebssystem (nicht dargestellt) unterbrechen, sondern nur dann verarbeitet werden, wenn das Echtzeit-Betriebssystem dies "erlaubt".

In der Figur 3 ist eine zu den Figuren 1 und 2 ähnliche Hardware-Plattform dargestellt, wobei hier jedoch drei Peripherie-Bausteine I/O Device 0, 1, 2 dargestellt sind, wobei das dritte Peripheriegerät I/O Device 2 ein sog. "Timer Device" ist, welches in einem ersten Schritt einen Timer-Interrupt INT (Timer) erzeugt. Auch hier wird dieser Interrupt INT (Timer) von den (globalen) Interrupt-Controllern I/O Apic 0 oder I/O Apic 1 im zweiten Schritt in ein "INIT"―Signal umgesetzt und an den ersten Prozessorkern CPU Core 0 geleitet. Auf diesen ersten Prozessorkern CPU Core 0 laufen, gesteuert durch die Virtualisierungssteuerung VMM 0, mehrere virtuelle Laufzeitumgebungen VM 0, 1, 2, ... ab. Durch den zyklisch auftretenden Timer-Interrupt INT (Timer) wird zyklisch in die Virtualisierungssteuerung VMM 0 ausgesprungen, und zwar durch jeweils einen dritten Schritt VmExit. Bei jedem Aussprung wechselt die Virtualisierungssteuerung VMM 0 die nach der Rückkehr aus diesem Aussprung abzuarbeitende oder auszuführende virtuelle Maschine VM 0, 1, 2, .... Dies bedeutet, dass ein zyklischer Kontextwechsel, beispielsweise nach einem Round-Robin-Verfahren, in Bezug auf die virtuellen Maschinen VM 0, 1, 2, ... gesteuert wird.

In einem vierten, nicht dargestellten Beispiel kann in einer Virtualisierungssteuerung VMM 0, VMM 1 eine "Watch Dog-Timer"-Routine realisiert sein, die periodisch über einen "Special-Purpose"-Interrupt (INIT, NMI, START etc.) aufgerufen wird. Dadurch wird ein unbedingter Aussprung von VmExit jeweils erzwungen, so dass auch dann die Kontrolle an die Virtualisierungssteuerung VMM 0, VMM 1 übertragen wird, wenn es in ein Problem in einer der virtuellen Maschinen gibt, beispielsweise eine Endlosschleife, ein "Absturz" etc. In einem solchen Fall können durch die Virtualisierungssteuerung VMM 0, 1 entsprechende Aktionen ausgeführt werden, beispielsweise Neustart einer virtuellen Maschine oder eines Betriebssystems etc.

Grundsätzlich kann gesagt werden, dass durch die beschriebenen Verfahren anstelle des "Abfangens" aller Interrupts, die an einen Prozessorkern gerichtet sind, nur solche Interrupts abgefangen und verarbeitet werden, die von vordefinierten, vorbestimmten Geräten und Peripheriekomponenten stammen, die derart im System (hauptsächlich in den Interrupt-Control-Registern) initialisiert sind, dass diese spezielle Interrupts erzeugen, beispielsweise ein INIT-Signal. Dadurch können diese auch dann durch die Virtualisierungssteuerungen abgefangen werden, wenn gerade eine virtuelle Maschine durch den entsprechenden Prozessorkern ausgeführt wird. Derart erzeugte "Special-Purpose"-Interrupts haben eine höhere Priorität als maskierbare Interrupts und nieder-priore Ereignisse. Deshalb sind die Verfahren sehr effizient beim Abfangen von Interrupt-Anforderungen von Geräten, die zeitkritische Interrupt-Anforderungen bzw. Unterbrechungsanforderungen haben, beispielsweise bei Echtzeit-Ethernet-Geräten.

## Patentansprüche

1. Verfahren für die Verarbeitung von Unterbrechungsanforderungen (INT) mittels eines Datenverarbeitungsgerätes mit zumindest einer virtuellen Maschine (VM 0, VM 1),
wobei auf der zumindest einen virtuellen Maschine (VM 0, VM 1) ein Betriebssystem installiert ist, und
wobei eine Virtualisierungssteuerung (VMM0, VMM1) den Betrieb der virtuellen Maschine (VM 0, VM 1) kontrolliert,
**dadurch gekennzeichnet,**
**dass** bei den Unterbrechungsanforderungen (INT) zumindest zwischen ersten und zweiten Unterbrechungsanforderungen (INT) unterschieden wird,
wobei im Fall einer ersten Unterbrechungsanforderung (INT) die Kontrolle an die Virtualisierungssteuerung (VMM0, VMM1) übergeben wird, wobei durch die Virtualisierungssteuerung (VMM0, VMM1) eine Aktion durchgeführt wird, und
**dass** im Fall einer zweiten Unterbrechungsanforderung (INT) diese direkt an das Betriebssystem der virtuellen Maschine (VM 0, VM 1) weitergeleitet wird.

2. Verfahren nach Patentanspruch 1,
**dadurch gekennzeichnet,**
**dass** im Fall einer ersten Unterbrechungsanforderung (INT) ein Grund für diese erste Unterbrechungsanforderung (INT) in einen Nachrichtenspeicher geschrieben wird, wobei durch die Virtualisierungssteuerung (VMM0, VMM1) der Nachrichtenspeicher ausgelesen und anhand des ausgelesenen Grundes die Aktion bestimmt wird.

3. Verfahren nach einem der vorhergehenden Patentansprüche, **dadurch gekennzeichnet,**
**dass** auf dem Datenverarbeitungsgerät mehrere virtuelle Maschinen (VM 0, VM 1) betrieben werden, wobei zumindest in einer der virtuellen Maschinen (VM 0, VM 1) ein Echtzeit-Betriebssystem abläuft.

4. Verfahren nach einem der vorhergehenden Patentansprüche, **dadurch gekennzeichnet,**
**dass** als die erste Unterbrechungsanforderung (INT) ein nichtmaskierbarer Interrupt verwendet wird.

5. Verfahren nach einem der vorhergehenden Patentansprüche, **dadurch gekennzeichnet,**
**dass** als die erste Unterbrechungsanforderung (INT) ein INIT-Signal verwendet wird.

6. Verfahren nach einem der vorhergehenden Patentansprüche, **dadurch gekennzeichnet,**
**dass** als die erste Unterbrechungsanforderung (INT) ein STARTSignal verwendet wird.

7. Verfahren nach einem der vorhergehenden Patentansprüche, **dadurch gekennzeichnet,**
**dass** als Aktion ein Interrupt in ein dafür vorgesehenes Betriebssystem einer der virtuellen Maschinen (VM 0, VM 1) injiziert wird.

8. Verfahren nach Patentanspruch 7,
**dadurch gekennzeichnet,**
**dass** als das vorgesehene Betriebssystem eine Service-Maschine verwendet wird.

9. Verfahren nach einem der Patentansprüche 7 oder 8, **dadurch gekennzeichnet,**
**dass** als das vorgesehene Betriebsystem ein Nicht-Echtzeit-Betriebssystem verwendet wird.

10. Verfahren nach einem der vorhergehenden Patentansprüche, **dadurch gekennzeichnet,**
**dass** als zweite Unterbrechungsanforderung (INT) ein maskierbarer Interrupt verwendet wird.

11. Verfahren nach einem der vorhergehenden Patentansprüche, **dadurch gekennzeichnet,**
**dass** als Aktion ein Kontextwechsel zwischen einer Anzahl virtueller Maschinen (VM 0, VM 1) ausgelöst wird.

12. Verfahren nach einem der Patentansprüche 3 bis 11, **dadurch gekennzeichnet,**
**dass** als Aktion der Ablauf des Echtzeit-Betriebssystems überwacht wird.

13. Virtualisierungssteuerung (VMM0, VMM1) für ein Datenverarbeitungsgerät,
**dadurch gekennzeichnet,**
**dass** die Virtualisierungssteuerung (VMM0, VMM1) zur Initialisierung des Datenverarbeitungsgeräts eingerichtet ist,
wobei das Datenverarbeitungsgerät zur Ausführung eines der vorstehend beschriebenen Verfahren eingerichtet wird,
wobei zumindest ein Ereignis zum Auslösen einer ersten oder einer zweiten Unterbrechungsanforderung (INT) konfigurierbar ist.
